# EUROPÄISCHE PATENTSCHRIFT

(11) **EP 3 569 401 B1**
(45) Veröffentlichungstag und Bekanntmachung des Hinweises auf die Patenterteilung: **23.03.2022**
(21) Anmeldenummer: 19174331.9
(22) Anmeldetag: 14.05.2019
(51) Int. Cl.: B32B 1/08, B32B 5/02, B32B 7/12, B32B 25/04, B32B 25/10, B32B 25/14, F16L 11/04

(54) **FLUIDLEITUNG ZUM LEITEN EINES FLUIDS**
FLUID CONDUIT FOR GUIDING A FLUID
CONDUITE DE FLUIDE DESTINÉE À CONDUIRE UN FLUIDE

(30) Priorität: 18.05.2018 DE 102018111968
(43) Veröffentlichungstag der Anmeldung: 20.11.2019
(73) Patentinhaber: VERITAS AG, 63571 Gelnhausen (DE)
(72) Erfinder: VAN HOOREN, Marc, 63579 Freigericht (DE); ROSEMANN, Michael, 63594 Hasselroth (DE); KNOPP, Matthias, 63486 Bruchköbel (DE); SCHULZ, Volker, 63607 Wächtersbach (DE)
(74) Vertreter: Patentship Patentanwaltsgesellschaft mbH

(56) Entgegenhaltungen:
- EP-A1- 2 581 223
- EP-A1- 2 762 306
- EP-A2- 0 826 915
- EP-A2- 1 306 202
- WO-A1-2012/168053
- DE-A1-102007 058 721
- DE-A1-102013 103 759
- DE-U1-202004 002 630

## Beschreibung

Die vorliegende Erfindung betrifft eine Fluidleitung zum Leiten eines Fluids, insbesondere eine Fluidleitung in einem Fahrzeug zum Leiten eines Fluids.

In einem Fahrzeug wird eine Vielzahl von Fluidleitungen verwendet, um Gase oder Flüssigkeiten zu transportieren. Um einen Verbrennungsmotor eines Kraftfahrzeuges während des Betriebs mit Ladeluft zu versorgen, wird Ladeluft durch eine als Ladeluftleitung ausgebildete Fluidleitung geleitet.

In der DE 10 2009 026 254 A1 ist ein Schlauch mit einer Innenschicht aus einer aminisch vernetzten Kautschukmischung mit medienbeständigen Eigenschaften, einer Haftschicht aus einer peroxidisch vernetzten Kautschukmischung, einer Festigkeitsträgerschicht und einer Außenschicht offenbart.

In der DE 10 2013 103 759 A1 ist ein Schlauch mit einer Innenschicht als Sperrschicht und einer Außenschicht aus einer vernetzten Kautschukmischung offenbart.

Die DE 20 2004 002 630 U1 offenbart einen vierlagigen Heißdieselschlauch.

Die DE 10 2007 058 721 A1 offenbart eine mehrschichtige Leitung.

Die WO 2012/168053 A1 offenbart eine bisphenolisch vernetzte Leitung.

Die EP 1 306 202 A1 offenbart einen leitfähigen mehrschichtigen Schlauch.

Es ist die der Erfindung zugrundeliegende Aufgabe, eine Fluidleitung für ein Kraftfahrzeug bereitzustellen, welche eine vorteilhafte chemische und mechanische Widerstandsfähigkeit aufweist, sowie hohen Temperaturen widerstehen kann.

Diese Aufgabe wird durch die Gegenstände mit den Merkmalen nach den unabhängigen Ansprüchen gelöst. Vorteilhafte Ausführungsformen der Erfindung sind Gegenstand der Figuren, der Beschreibung und der abhängigen Ansprüche.

Gemäß einem ersten Aspekt der Erfindung wird die Aufgabe durch eine Fluidleitung zum Leiten eines Fluids gelöst, mit einer Außenschicht, welche ein Acrylat-Elastomer umfasst, einer Zwischenschicht, welche ein Acrylat-Elastomer umfasst, und welche innerhalb der Außenschicht angeordnet ist, und einer Sperrschicht, welche ein Fluorelastomer, insbesondere FKM, umfasst, welche innerhalb der Zwischenschicht angeordnet ist und welche einen Leitungsinnenraum der Fluidleitung zum Leiten des Fluids begrenzt, wobei die Sperrschicht ausgebildet ist, eine Diffusion des Fluids durch die Sperrschicht zu reduzieren. Dadurch wird beispielsweise der technische Vorteil erreicht, dass eine Fluidleitung bereitgestellt werden kann, welche eine wirksame chemische Beständigkeit gegenüber Fluid aufweist, welches durch den Leitungsinnenraum der Fluidleitung geleitet wird, welche eine wirksame mechanische Beständigkeit gegenüber äußeren Einflüssen aufweist, und welche hohen Temperaturen des Fluids wirksam widerstehen kann.

Die Sperrschicht umfasst ein Fluorelastomer, insbesondere FKM, und grenzt die Fluidleitung gegenüber dem Leitungsinnenraum der Fluidleitung ab und reduziert eine Diffusion des Fluids durch die Sperrschicht. Dadurch kann sichergestellt werden, dass auch chemisch reaktive Fluide, welche durch die Fluidleitung geleitet werden, die Fluidleitung nicht beschädigen, so dass eine wirksame Leitung von Fluiden, wie z.B. Ladeluft mit Säuren oder Kondensaten, bzw. Motoröl, durch die Fluidleitung sichergestellt werden kann. Zudem weist eine ein Fluorelastomer, insbesondere FKM, umfassende Sperrschicht eine besonders hohe Temperaturbeständigkeit auf.

Die Zwischenschicht der Fluidleitung stellt einen wirksamen Verbund zwischen der innenliegenden Sperrschicht und einer außen liegenden Außenschicht sicher.

Die Außenschicht grenzt die Fluidleitung gegenüber einem Außenbereich der Fluidleitung ab und schützt die darunter liegende Sperrschicht und die darunterliegende Zwischenschicht vor mechanischer und/oder chemischer Beschädigung, z.B. falls die Fluidleitung in der beengten Bauraumsituation in einem Motorraum eines Kraftfahrzeugs in Kontakt mit anderen Bauteilen tritt.

Die Außenschicht und die Zwischenschicht bestehen hierbei jeweils aus Acrylat-Elastomer. Das Acrylat-Elastomer stellt hierbei nicht nur eine hohe Temperaturbeständigkeit der Fluidleitung sicher, sondern stellt insbesondere auch eine wirksame chemische Beständigkeit der Außenschicht der Fluidleitung gegenüber gegebenenfalls im Motorraum vorhandenes Motoröl sicher, was durch herkömmliche verwendete Außenschichten aus Ethylen-Propylen-Dien-Kautschuk (EPDM) nicht in diesem Ausmaß gewährleistet werden kann.

Die Fluidleitung ist hierbei insbesondere als ein formstabiler Formschlauch ausgebildet, welcher insbesondere einen zweidimensional oder dreidimensional gekrümmten Verlauf aufweist, so dass ein wirksames Verlegen der Fluidleitung in einer beengten Bauraumsituation ermöglicht wird.

Somit gewährleistet die Fluidleitung gemäß der vorliegenden Offenbarung eine kostengünstige Konstruktion einer Fluidleitung, welche eine vorteilhafte chemische und mechanische Widerstandsfähigkeit aufweist, und zudem hohen Temperaturen wirksam widerstehen kann.

In einer vorteilhaften Ausführungsform kann das Fluorelastomer der Sperrschicht, insbesondere FKM, hierbei Temperaturen von mehr als 150 °C, insbesondere von mehr als 175 °C, insbesondere von mehr als 200 °C, insbesondere von mehr als 210 °C, insbesondere von mehr als 225 °C widerstehen.

In einer vorteilhaften Ausführungsform umfasst die Sperrschicht ein bisphenolisch und/oder peroxidisch vernetztes Fluorelastomer, insbesondere FKM, und/oder umfasst das Fluorelastomer, insbesondere FKM, Polymere aus Vinylidenfluorid (VDF), Hexafluorpropylen (HFP) und/oder Tetrafluorethylen (TFE).

Dadurch wird beispielsweise der technische Vorteil erreicht, dass durch ein bisphenolisch und/oder peroxidisch vernetztes Fluorelastomer, insbesondere FKM, welches insbesondere Polymere aus Vinylidenfluorid (VDF), Hexafluorpropylen (HFP) und/oder Tetrafluorethylen (TFE) umfasst, eine thermisch und chemisch stabile Sperrschicht bereitgestellt werden kann. Die Außenschicht und/oder Zwischenschicht umfasst ein aminisch und/oder peroxidisch vernetztes Acrylat-Elastomer, und/oder umfasst das Acrylat-Elastomer Ethylen-Acrylat Kautschuk (AEM) und/oder Polyacrylat-Kautschuk (ACM). Dadurch wird beispielsweise der technische Vorteil erreicht, dass das aminisch und/oder peroxidisch vernetzte Acrylat-Elastomer, insbesondere der aminisch und/oder peroxidisch Ethylen-Acrylat Kautschuk (AEM) und/oder der aminisch und/oder peroxidisch vernetzte Polyacrylat-Kautschuk (ACM) besonders vorteilhafte Eigenschaften der Zwischenschicht, und/oder der Außenschicht sicherstellen.

Durch die Zugabe eines Diamins und eines basischen Aktivators kann eine wirksame aminische Vernetzung in der Zwischenschicht und/oder der Außenschicht sichergestellt werden. Der Anteil des Diamins in der Zwischenschicht und/oder der Außenschicht beträgt insbesondere von 0,3 Gew.-% bis 2,1 Gew.-%, insbesondere von 0,4 Gew.-% bis 1,5 Gew.-%, insbesondere von 0,5 Gew.-% bis 1,0 Gew.-%. Der Anteil des basischen Aktivators in der Zwischenschicht und/oder der Außenschicht beträgt insbesondere von 0,5 Gew.-% bis 3,5 Gew.-%, insbesondere von 0,5 Gew.-% bis 2,4 Gew.-%, insbesondere von 0,7 Gew.-% bis 2,0 Gew.-%.

Insbesondere umfasst das Diamin Hexamethylendiamin (HMD), Hexamethylendiamin-Carbamat (HMDC) und/oder 2,2-Bis[4-(4-aminophenoxy)phenyl]propen und/oder umfasst der basische Aktivator Diphenylguanidin (DPG) und/oder Diazabicycloundecen (DBU). Durch die Zugabe von Hexamethylendiamin (HMD), Hexamethylendiamin-Carbamat (HMDC) und/oder 2,2-Bis[4-(4-aminophenoxy)phenyl]propen als Diamin, bzw. Diphenylguanidin (DPG) und/oder Diazabicycloundecen (DBU) als basischer Aktivator bei der Herstellung der Zwischenschicht und/oder der Außenschicht wird sichergestellt, dass eine wirksame Vernetzung des aminisch vernetzten Acrylat-Elastomers, insbesondere des aminisch vernetzten Ethylen-Acrylat Kautschuks (AEM) und/oder des aminisch vernetzten Polyacrylat-Kautschuks (ACM) erreicht wird.

Das peroxidisch vernetzte Acrylat-Elastomer, insbesondere der peroxidisch vernetzte Ethylen-Acrylat Kautschuk (AEM) und/oder der peroxidisch vernetzte Polyacrylat-Kautschuk (ACM), umfasst insbesondere ein Peroxid-Derivat, einen Co-Aktivator und/oder einen Säureakzeptor, wobei das Peroxid-Derivat insbesondere ein Alkyl-Aralkyl-Peroxid-Derivat, ein Diaralkyl-Peroxid-Derivat, ein Peroxyketal-Derivat und/oder ein Peroxyester-Derivat umfasst, wobei der Co-Aktivator insbesondere Triallylcyanurat (TAC), Triallylisocyanurat (TAIC), Trimethylolpropan-trimethacrylat (TRIM), Dimethylacrylat, Trimethylacrylat, Triazin und/oder Bismaleinimid umfasst, und/oder wobei der Säureakzeptor insbesondere Epoxidharze, epoxidierte Öle, Magnesiumoxid und/oder Hydrotalcit umfasst.

Durch die Zugabe des Peroxid-Derivats, des Co-Aktivators und des Säureakzeptors kann eine wirksame peroxidische Vernetzung in der Zwischenschicht und/oder der Außenschicht sichergestellt werden. Der Anteil des Peroxid-Derivats in der Zwischenschicht und/oder der Außenschicht beträgt insbesondere von 0,5 Gew.-% bis 6,0 Gew.-%, insbesondere von 0,8 Gew.-% bis 4,0 Gew.-%, insbesondere von 1,0 Gew.-% bis 2,0 Gew.-%. Der Anteil des Co-Aktivators in der Zwischenschicht und/oder der Außenschicht beträgt insbesondere von 0,1 Gew.-% bis 10,0 Gew.-%, insbesondere von 0,5 Gew.-% bis 5,0 Gew.-%, insbesondere von 1,0 Gew.-% bis 2,0 Gew.-%.

In einer vorteilhaften Ausführungsform umfasst der Ethylen-Acrylat Kautschuk (AEM) und/oder der Polyacrylat-Kautschuk (ACM) Hochtemperatur-AEM und/oder Hochtemperatur-ACM.

Dadurch wird der technische Vorteil erreicht, dass ein Hochtemperatur-AEM und/oder Hochtemperatur-ACM eine besonders hohe Wärmebeständigkeit der Zwischenschicht und/oder der Außenschicht sicherstellt. Ein Hochtemperatur-AEM und/oder Hochtemperatur-ACM im Rahmen der vorliegenden Offenbarung kann hierbei insbesondere Temperaturen von mehr als 150 °C, insbesondere von mehr als 175 °C, insbesondere von mehr als 185 °C widerstehen.

In einer vorteilhaften Ausführungsform umfasst die Fluidleitung zumindest einen Festigkeitsträger, welcher zwischen der Sperrschicht und der Zwischenschicht, oder welcher zwischen der Zwischenschicht und der Außenschicht angeordnet ist.

Dadurch wird der technische Vorteil erreicht, dass der zumindest eine Festigkeitsträger sicherstellt, dass auch wenn das Fluid mit einem hohen Druck durch die Fluidleitung geleitet wird, die strukturelle Integrität der Fluidleitung nicht beeinträchtigt wird. Dies wird dadurch gewährleistet, dass der Festigkeitsträger auf die Fluidleitung wirkende Druckkräfte wirksam aufnehmen kann. Insbesondere kann der zumindest eine Festigkeitsträger einen ersten Festigkeitsträger zwischen der Zwischenschicht und der Außenschicht und einen zweiten Festigkeitsträger zwischen Sperrschicht und der Zwischenschicht umfassen.

In einer vorteilhaften Ausführungsform ist der Festigkeitsträger als ein einlagiger oder mehrlagiger Festigkeitsträger ausgebildet, und umfasst der Festigkeitsträger insbesondere ein Gewebe, Gewirk und/oder Gestrick.

Dadurch wird beispielsweise der technische Vorteil erreicht, dass ein entsprechend ausgebildeter Festigkeitsträger besonders wirksam Druckbelastungen aufnehmen kann.

In einer vorteilhaften Ausführungsform umfasst der Festigkeitsträger aromatische oder aliphatische Polyamid-Fasern, Polyoxadiazol-Fasern, Polyester-Fasern, Polyphenylensulfid-Fasern, Aramid-Fasern, insbesondere meta-Aramid-Faser und/oder para-Aramid-Fasern, Polyimid-Fasern, Polyvinylacetal-Fasern, Polyetheretherketon-Fasern, oder Mischungen davon.

Dadurch wird beispielsweise der technische Vorteil erreicht, dass die genannten Fasern eine hohe Temperatur- und Druckbeständigkeit aufweisen und sich vorteilhaft zu verformbaren Festigkeitsträgern verarbeiten lassen. Aufgrund der mechanischen und chemischen Eigenschaften können insbesondere meta-Aramid-Fasern und/oder Polyoxadiazol-Fasern in dem Festigkeitsträger verwendet werden. Insbesondere können die Fasern des Festigkeitsträgers zudem Resorcin-Formaldehyd-Latex umfassen.

In einer vorteilhaften Ausführungsform umfasst die Fluidleitung zumindest eine weitere Zwischenschicht, welche zwischen der Sperrschicht und der Zwischenschicht, oder welche zwischen der Zwischenschicht und der Außenschicht angeordnet ist.

Dadurch wird beispielsweise der technische Vorteil erreicht, dass die weitere Zwischenschicht einen wirksamen Einschluss des Festigkeitsträgers innerhalb der Fluidleitung sicherstellt, so dass die strukturelle Integrität der Fluidleitung während des Betriebs der Fluidleitung besonders vorteilhaft sichergestellt werden kann.

In einer vorteilhaften Ausführungsform umfasst die Zwischenschicht und/oder die weitere Zwischenschicht einen Haftvermittler, wobei der Haftvermittler insbesondere Phosphonium-Salze, starke Basen wie z.B. Diaazabicycloundecen (DBU), Maleinsäureanhydride und/oder Bisphenole umfasst.

Dadurch wird beispielsweise der technische Vorteil erreicht, dass der Haftvermittler einen stabilen Haftverbund zwischen der jeweiligen Zwischenschicht und den angrenzenden Schichten sicherstellt.

In einer vorteilhaften Ausführungsform ist die Fluidleitung als ein formstabiler Formschlauch ausgebildet, wobei der Formschlauch insbesondere einen zweidimensional oder dreidimensional gekrümmten Verlauf aufweist.

Dadurch wird beispielsweise der technische Vorteil erreicht, dass ein Formschlauch besonders vorteilhaft in einer beengten Bauraumsituation, z.B. in einem Motorraum eines Kraftfahrzeuges, verlegt werden kann. Hierbei kann die zweidimensionale oder dreidimensionale Krümmung des Formschlauchs an die geometrischen Beschränkungen in dem Bauraum angepasst werden. Der Formschlauch kann zumindest abschnittsweise elastisch sein, wodurch der Formschlauch beim Einbau partiell aufgebogen werden kann, um einen wirksamen Einbau zu gewährleisten, wobei sich der Formschlauch nach dem Einbau jedoch wieder in die ursprüngliche Form des Formschlauchs zurück verformt, so dass der Formschlauch eine wirksame Formstabilität aufweist. Insbesondere weist der zweidimensional oder dreidimensional gekrümmte formstabile Formschlauch eine Mehrzahl von Biegungen auf.

In einer vorteilhaften Ausführungsform ist die Fluidleitung als ein Extrusionsformteil geformt.

Dadurch wird beispielsweise der technische Vorteil erreicht, dass ein Extrusionsformteil eine besonders vorteilhafte Fertigung der Fluidleitung sicherstellt und zudem eine wirksame Anordnung und stabile Verbindung der einzelnen Schichten innerhalb der Fluidleitung sichergestellt wird.

In einer vorteilhaften Ausführungsform ist die Fluidleitung als eine Ladeluftleitung geformt, welche ausgebildet ist Ladeluft, insbesondere Ladeluft mit Säuren, Kondensaten, und/oder Motoröl, in einem Fahrzeug zu leiten.

Dadurch wird beispielsweise der technische Vorteil erreicht, dass eine Ladeluftleitung eine wirksame chemische und mechanische Beständigkeit gegenüber gegebenenfalls verunreinigter Ladeluft aufweist.

In einer vorteilhaften Ausführungsform weist die Fluidleitung einen Innendurchmesser zwischen 20 mm und 100 mm, insbesondere zwischen 30 mm und 85 mm auf.

Dadurch wird beispielsweise der technische Vorteil erreicht, dass der Innendurchmesser der Fluidleitung ein ausreichend großes Volumen des Leitungsinnenraums bereitstellt, so dass eine ausreichende Menge an Fluid durch den Leitungsinnenraum der Fluidleitung geführt werden kann.

In einer vorteilhaften Ausführungsform weist die Fluidleitung eine Wandstärke zwischen 2 mm und 7 mm, insbesondere zwischen 3,5 mm und 5,0 mm auf.

Dadurch wird beispielsweise der technische Vorteil erreicht, dass die Wandstärke eine ausreichende Stabilität der Fluidleitung bereitstellt, so dass die Fluidleitung auch in einer beengten Bauraumsituation wirksam verlegt werden kann.

Gemäß einem zweiten Aspekt der Erfindung wird die Aufgabe durch ein Verfahren zum Herstellen einer Fluidleitung zum Leiten eines Fluids gelöst, umfassend die folgenden Schritte, Extrudieren einer Sperrschicht, welche einen Leitungsinnenraum der Fluidleitung zum Leiten des Fluids begrenzt, wobei die Sperrschicht ein Fluorelastomer, insbesondere FKM, umfasst und ausgebildet ist, eine Diffusion des Fluids durch die Sperrschicht zu reduzieren, Extrudieren einer Zwischenschicht, welche ein Acrylat-Elastomer umfasst, auf der Sperrschicht, und Extrudieren einer Außenschicht, welche ein Acrylat-Elastomer umfasst, auf der Zwischenschicht.

Dadurch wird beispielsweise der technische Vorteil erreicht, dass das Verfahren die vorteilhafte Herstellung einer drei-lagigen Fluidleitung mit einer wirksamen chemischen und mechanischen Beständigkeit sicherstellt.

In einer vorteilhaften Ausführungsform umfasst das Verfahren die folgenden Schritte, Extrudieren einer Sperrschicht, welche einen Leitungsinnenraum der Fluidleitung zum Leiten des Fluids begrenzt, wobei die Sperrschicht ein Fluorelastomer, insbesondere FKM, umfasst und ausgebildet ist, eine Diffusion des Fluids durch die Sperrschicht zu reduzieren, Extrudieren einer Zwischenschicht, welche ein Acrylat-Elastomer umfasst, auf der Sperrschicht, Anordnen eines Festigkeitsträgers auf der Zwischenschicht, und Extrudieren einer Außenschicht, welche ein Acrylat-Elastomer umfasst, auf den Festigkeitsträger.

Dadurch wird beispielsweise der technische Vorteil erreicht, dass das Verfahren die vorteilhafte Herstellung einer vier-lagigen Fluidleitung mit einer wirksamen chemischen und mechanischen Beständigkeit sicherstellt.

Ausführungsbeispiele der Erfindung sind in den Zeichnungen dargestellt und werden im Folgenden näher beschrieben.

Es zeigen:
- Fig. 1: eine perspektivische Ansicht einer Fluidleitung gemäß einer ersten Ausführungsform;
- Fig. 2: eine perspektivische Ansicht einer Fluidleitung gemäß einer zweiten Ausführungsform; und
- Fig. 3: eine schematische Darstellung eines Verfahrens zum Herstellen einer Fluidleitung.

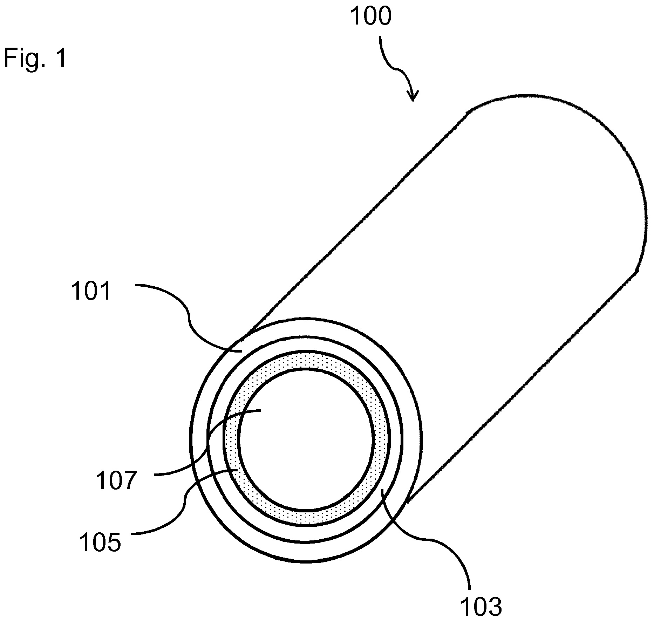

Fig. 1 zeigt eine perspektivische Ansicht einer Fluidleitung 100. Der Fluidleitung 100 umfasst insbesondere eine Fluidleitung 100 für Fahrzeuge, insbesondere für Kraftfahrzeuge mit einem Verbrennungsmotor.

Kraftfahrzeuge mit Verbrennungsmotoren weisen Fluidleitungen 100 auf, welche insbesondere eine Ladeluftleitung umfassen, welche ausgebildet ist Ladeluft dem Verbrennungsmotor zuzuführen.

Die durch eine Ladeluftleitung geleitete Ladeluft kann neben der Ladeluft auch noch Verunreinigungen, wie z.B. Motoröl, Kraftstoffdämpfe, Kraftstoffkondensate, Abgase, Blowby-Gase und/oder Säuren, umfassen. Aus diesem Grund müssen Fluidleitungen 100 zur Leitung von Ladeluft eine ausreichende chemische Beständigkeit gegenüber dem geleiteten Fluid aufweisen. Um den mit hohen Temperaturen und hohen Druck geleiteten Fluiden widerstehen zu können, müssen die entsprechende Fluidleitungen 100 auch eine ausreichende mechanische Beständigkeit aufweisen. Zudem müssen die entsprechenden Fluidleitungen 100 in der beengten Bauraumsituation des Motoraums des Kraftfahrzeuges mit engen Biegeradien verlegt werden können, und aus diesem Grund dynamisch verformbare Eigenschaften aufweisen.

Die Fluidleitung 100 ist hierbei insbesondere als ein formstabiler Formschlauch ausgebildet, welcher insbesondere einen zweidimensional oder dreidimensional gekrümmten Verlauf aufweist, wodurch der Formschlauch besonders vorteilhaft in einer beengten Bauraumsituation eines Motorraums eines Kraftfahrzeuges verbaut werden kann. Bei der Herstellung einer als Formschlauch ausgebildeten Fluidleitung 100 wird ein Schlauchrohling in die gewünschte Form des Formschlauches gebogen. Anschließend wird der Schlauchrohling, z.B. durch Vulkanisation, in der gewünschten Form fixiert, so dass ein formstabiler Formschlauch erhalten wird. Der formstabile Formschlauch weist eine gewisse Flexibilität auf, jedoch kehrt der Formschlauch bei einem Verbiegen oder Verdrehen des Formschlauchs erneut in die ursprüngliche Form zurück. Ein zweidimensional oder dreidimensional gekrümmter formstabiler Formschlauch weist insbesondere eine Mehrzahl von Biegungen auf.

Die in der Fig. 1 dargestellte Fluidleitung 100 weist eine Außenschicht 101 auf, welche ausgebildet ist, die Fluidleitung 100 vor äußeren mechanischen und chemischen Einflüssen wirksam zu schützen. Die Fluidleitung 100 weist ferner eine Zwischenschicht 103 auf, welche innerhalb der Außenschicht 101 angeordnet ist, und welche ausgebildet ist, einen wirksamen Verbund zwischen der Außenschicht 101 und weiter innerhalb liegenden Schichten bereitzustellen

Die Außenschicht 101 und die Zwischenschicht 103 umfasst hierbei jeweils ein Acrylat-Elastomer, welches eine wirksame Öl- und Wärmebeständigkeit aufweist, und dadurch gegenüber herkömmlich verwendetem Ethylen-Propylen-Dien-Kautschuk (EPDM) vorteilhafte Eigenschaften aufweist.

Die Außenschicht 101 und/oder die Zwischenschicht 103 umfasst hierbei insbesondere ein aminisch und/oder peroxidisch vernetztes Acrylat-Elastomer. Das Acrylat-Elastomer kann insbesondere Ethylen-Acrylat Kautschuk (AEM) und/oder Polyacrylat-Kautschuk (ACM) umfassen.

Die Außenschicht 101 und/oder die Zwischenschicht 103 umfasst insbesondere einen aminisch vernetzten Ethylen-Acrylat-Kautschuk (AEM) und/oder einen aminisch vernetzten Polyacrylat-Kautschuk (ACM) oder umfasst alternativ einen peroxidisch vernetzten Ethylen-Acrylat-Kautschuk (AEM) und/oder einen peroxidisch vernetzten Polyacrylat-Kautschuk (ACM).

Um eine wirksame Vernetzung innerhalb des aminisch vernetzten AEM- und/oder ACM-Kautschuks der Außenschicht 101 und der Zwischenschicht 103 zu erreichen, werden für die Vernetzung der Außenschicht 101 und der Zwischenschicht 103 verschiedene Vernetzungssysteme verwendet, welche unterschiedliche Vernetzungsmittel und Aktivatoren umfassen, die im Folgenden beschrieben sind.

Der aminisch vernetzte AEM- und/oder ACM-Kautschuk umfasst ein aminisches Vernetzungsmittel, welches insbesondere ein Diamin, insbesondere Hexamethylendiamin (HMD), Hexamethylendiamin-Carbamat (HMDC), und/oder 2,2-Bis[4-(4-aminophenoxy)phenyl]propen umfasst. Der Anteil des aminischen Vernetzungsmittels in der Außenschicht 101 und/oder in der Zwischenschicht 103 beträgt insbesondere von 0,3 Gew.-% bis 2,1 Gew.-%, insbesondere von 0,4 Gew.-% bis 1,5 Gew.-%, insbesondere von 0,5 Gew.-% bis 1,0 Gew.-%.

Der aminisch vernetzte AEM- und/oder ACM-Kautschuk umfasst ein ferner einen basischen Aktivator, insbesondere Diphenylguanidin (DPG) und/oder Diazabicycloundecen (DBU). Der Anteil des basischen Aktivators in der Außenschicht 101 und/oder in der Zwischenschicht 103 beträgt insbesondere von 0,5 Gew.-% bis 3,5 Gew.-%, insbesondere von 0,5 Gew.-% bis 2,4 Gew.-%, insbesondere von 0,7 Gew.-% bis 2,0 Gew.-%.

Der peroxidisch vernetzte Ethylen-Acrylat Kautschuk (AEM) und/oder der peroxidisch vernetzte Polyacrylat-Kautschuk (ACM) umfasst ein peroxidisches Vernetzungsmittel, welches insbesondere ein Peroxid-Derivat, einen Co-Aktivator, und/oder einen Säureakzeptor umfasst. Das Peroxid-Derivat umfasst insbesondere ein Alkyl-Aralkyl-Peroxid-Derivat, ein Diaralkyl-Peroxid-Derivat, ein Peroxyketal-Derivat und/oder ein Peroxyester-Derivat. Der Co-Aktivator umfasst insbesondere Triallylcyanurat (TAC), Triallylisocyanurat (TAIC), Trimethylolpropan-trimethacrylat (TRIM), Dimethylacrylat, Trimethylacrylat, Triazin, und/oder Bismaleinimid. Der Säureakzeptor umfasst insbesondere Epoxidharze, epoxidierte Öle, Magnesiumoxid und/oder Hydrotalcit.

Insbesondere umfasst der Ethylen-Acrylat Kautschuk (AEM) und/oder der Polyacrylat-Kautschuk (ACM) ein Hochtemperatur-AEM und/oder ein Hochtemperatur-ACM. Ein Hochtemperatur-AEM und/oder ein Hochtemperatur-ACM kann hierbei insbesondere Temperaturen von mehr als 150 °C, insbesondere von mehr als 175 °C, insbesondere von mehr als 185 °C widerstehen.

Durch die Außenschicht 101 kann eine mechanische Schutzfunktion der Fluidleitung 100 sichergestellt werden, da beim Kontakt der Außenschicht 101 der Fluidleitung 100 mit anderen Bauteilen in dem Fahrzeug auf die Außenschicht 101 wirkende mechanische Belastungen besonders wirksam durch die Außenschicht 101 aufgenommen werden können, so dass eine Beschädigung der innerhalb der Außenschicht 101 liegenden Schichten verhindert werden kann. Somit stellt die Außenschicht 101 der Fluidleitung 100 eine besonders vorteilhafte chemische und mechanische Schutzfunktion der Fluidleitung 100 sicher.

Innerhalb der Zwischenschicht 103 der Fluidleitung 100 ist eine Sperrschicht 105 angeordnet, welche einen Leitungsinnenraum 107 der Fluidleitung 100 zum Leiten eines Fluids begrenzt. Die Sperrschicht 105 ist hierbei ausgebildet eine Diffusion des Fluids durch die Sperrschicht 105 zu reduzieren.

Insbesondere kann das Fluorelastomer der Sperrschicht, insbesondere FKM, hierbei Temperaturen von mehr als 150 °C, insbesondere von mehr als 175 °C, insbesondere von mehr als 200 °C, insbesondere von mehr als 210 °C, insbesondere von mehr als 225 °C widerstehen.

Die Sperrschicht 105 umfasst insbesondere ein Fluorelastomer, insbesondere FKM, insbesondere ein bisphenolisch und/oder peroxidisch vernetztes Fluorelastomer, insbesondere FKM. Hierbei umfasst das Fluorelastomer, insbesondere FKM, insbesondere Polymere aus Vinylidenfluorid (VDF), Hexafluorpropylen (HFP) und/oder Tetrafluorethylen.

Die Zwischenschicht 103 stellt hierbei einen wirksamen Verbund zwischen der Sperrschicht 105 und der Außenschicht 101 der Fluidleitung 100 sicher. Hierbei kann die Zwischenschicht 103 insbesondere einen Haftvermittler umfassen, wobei der Haftvermittler insbesondere Phosphonium-Salze, starke Basen wie z.B. Diaazabicycloundecen (DBU), Maleinsäureanhydride und/oder Bisphenole umfasst.

Auch wenn dies in der Fig. 1 nicht dargestellt ist, kann die Fluidleitung 100 gemäß einer optionalen Ausführungsform zumindest einen Festigkeitsträger 109 aufweisen, welcher zwischen der Sperrschicht 105 und der Zwischenschicht 103, oder welcher zwischen der Zwischenschicht 103 und der Außenschicht 101 angeordnet ist. Insbesondere kann die Fluidleitung 100 zwei Festigkeitsträger 109 aufweisen, wobei einer der Festigkeitsträger 109 zwischen der Sperrschicht 105 und der Zwischenschicht 103 und der andere der Festigkeitsträger 109 zwischen der Zwischenschicht 103 und der Außenschicht 101 angeordnet ist.

Insbesondere kann der zumindest eine Festigkeitsträger 109 als ein einlagiger oder mehrlagiger Festigkeitsträger 109 ausgebildet sein, und kann der Festigkeitsträger 109 insbesondere ein Gewebe, Gewirk und/oder Gestrick umfassen.

Insbesondere kann der zumindest eine Festigkeitsträger 109 aromatische oder aliphatische Polyamid-Fasern, Polyoxadiazol-Fasern, Polyester-Fasern, Polyphenylensulfid-Fasern, Aramid-Fasern, insbesondere meta-Aramid-Faser und/oder para-Aramid-Fasern, Polyimid-Fasern, Polyvinylacetal-Fasern, Polyetheretherketon-Fasern, oder Mischungen davon umfassen.

Durch den zumindest einen Festigkeitsträger 109 kann eine wirksame mechanische Stabilisierung der Fluidleitung sichergestellt werden.

Auch wenn dies in der Fig. 1 nicht dargestellt ist, kann die Fluidleitung 100 gemäß einer optionalen Ausführungsform zumindest eine weitere Zwischenschicht umfassen, welche zwischen der Sperrschicht 105 und der Zwischenschicht 103, oder welche zwischen der Zwischenschicht 103 und der Außenschicht 101 angeordnet ist. Hierbei ist der zumindest eine Festigkeitsträger 109 insbesondere zwischen der Zwischenschicht 103 und der weiteren Zwischenschicht aufgenommen, um den Festigkeitsträger 109 besonders wirksam vor mechanischen Beschädigungen zu schützen.

Insbesondere kann die Fluidleitung 100 als ein Extrusionsformteil geformt sein. Die Sperrschicht 105, die Zwischenschicht 103, die weitere Zwischenschicht und die Außenschicht 101 können hierbei insbesondere in separaten Extrusions-Schritten oder in einem gemeinsamen Co-Extrusionsschritt extrudiert werden. Insbesondere können auch nur einige der Schichten, umfassend die Sperrschicht 105, die Zwischenschicht 103, die weitere Zwischenschicht und die Außenschicht 101, in einem Co-Extrusionsschritt extrudiert werden.

Somit ist die aus drei Schichten 101, 103, 105, insbesondere aus vier oder fünf Schichten 101, 103, 105, 109, bestehende Fluidleitung 100 als eine kostengünstige Fluidleitung 100 ausgebildet, welche eine wirksame chemische und mechanische Beständigkeit gegenüber einem durch den Leitungsinnenraum 107 geleiteten Fluid und gegenüber äußeren Einflüssen aufweist. Eine aus drei Schichten 101, 103, 105, insbesondere aus vier oder fünf Schichten 101, 103, 105, 109, bestehende Fluidleitung 100 kann in herkömmlich verwendeten Fertigungsanlagen für die drei-Schicht-Produktion hergestellt werden.

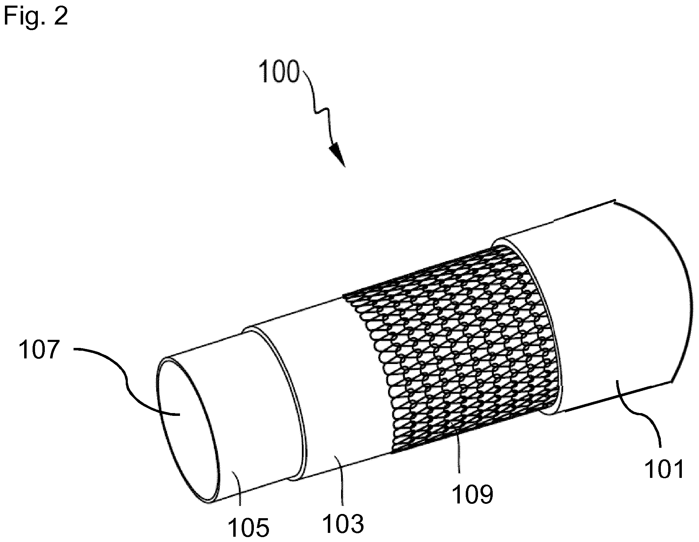

Fig. 2 zeigt eine perspektivische Ansicht einer Fluidleitung gemäß einer zweiten Ausführungsform.

Die in der Fig. 2 dargestellte Fluidleitung gemäß der zweiten
Ausführungsform unterscheidet sich von der in Fig. 1 dargestellten Fluidleitung gemäß der ersten Ausführungsform lediglich dadurch, dass die zweite Ausführungsform einen Festigkeitsträger 109 aufweist, welcher zwischen der Zwischenschicht 103 und der Außenschicht 101 der Fluidleitung 100 angeordnet ist.

Somit umfasst die Fluidleitung 100 gemäß der zweiten Ausführungsform die folgenden Schichten, eine Außenschicht 101, einen innerhalb der Außenschicht 101 angeordneten Festigkeitsträger 109, eine innerhalb des Festigkeitsträgers 109 angeordnete Zwischenschicht 103, und eine innerhalb der Zwischenschicht 103 angeordnete Sperrschicht 105.

Optional kann ein weiterer Festigkeitsträger 109 zwischen der Zwischenschicht 103 und der Sperrschicht 105 angeordnet sein. Optional kann eine weitere Zwischenschicht in der Fluidleitung 100 angeordnet sein, welche den Festigkeitsträger 109, bzw. den weiteren Festigkeitsträger 109 umschließt.

Für weitere Details wird auf die Ausführungen zur ersten Ausführungsform gemäß der Fig. 1 verwiesen.

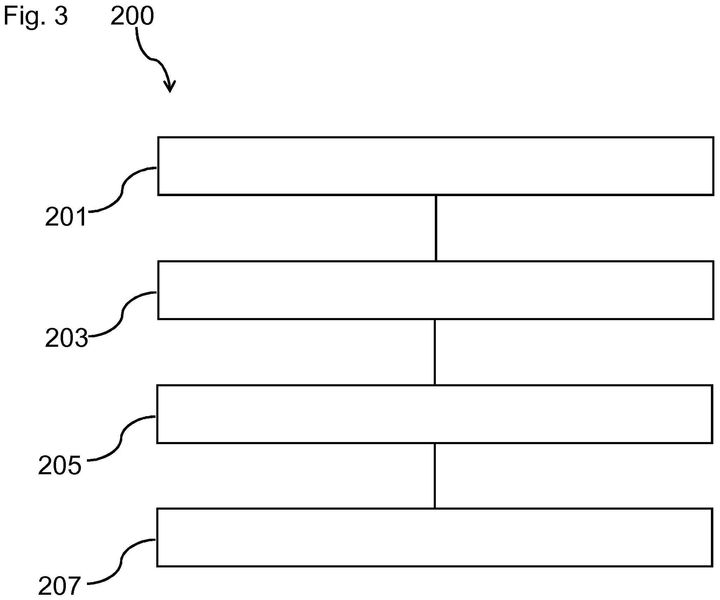

Fig. 3 zeigt eine schematische Darstellung eines Verfahrens zum Herstellen einer Fluidleitung.

Bei einer drei-Schicht Fluidleitung 100 umfasst das Verfahren 200 als ersten Schritt das Extrudieren 201 einer Sperrschicht 105, welche einen Leitungsinnenraum 107 der Fluidleitung 100 zum Leiten des Fluids begrenzt, wobei die Sperrschicht 105 ein Fluorelastomer, insbesondere FKM, umfasst und ausgebildet ist, eine Diffusion des Fluids durch die Sperrschicht 105 zu reduzieren, umfasst das Verfahren 200 als weiteren Schritt das Extrudieren 203 einer Zwischenschicht 103, welche ein Acrylat-Elastomer umfasst, auf der Sperrschicht 105, und umfasst das Verfahren als weiteren Schritt das Extrudieren 207 einer Außenschicht 101, welche ein Acrylat-Elastomer umfasst, auf dem Festigkeitsträger 109.

Bei einer vier-Schicht Fluidleitung 100 umfasst das Verfahren 200 als ersten Schritt das Extrudieren 201 einer Sperrschicht 105, welche einen Leitungsinnenraum 107 der Fluidleitung 100 zum Leiten des Fluids begrenzt, wobei die Sperrschicht 105 ein Fluorelastomer, insbesondere FKM, umfasst und ausgebildet ist, eine Diffusion des Fluids durch die Sperrschicht 105 zu reduzieren, umfasst das Verfahren 200 als weiteren Schritt das Extrudieren 203 einer Zwischenschicht 103, welche ein Acrylat-Elastomer umfasst, auf der Sperrschicht 105, umfasst das Verfahren 200 als weiteren Schritt das Anordnen 205 eines Festigkeitsträgers 109 auf der Zwischenschicht 103, und umfasst das Verfahren als weiteren Schritt das Extrudieren 207 einer Außenschicht 101, welche ein Acrylat-Elastomer umfasst, auf der Zwischenschicht 103.

Somit unterscheiden sich das Verfahren 200 zum Herstellen einer vier-Schicht Fluidleitung 100 gegenüber dem Verfahren 200 zum Herstellen einer drei-Schicht Fluidleitung 100 nur dadurch, dass beim Verfahren 200 zum Herstellen einer vier-Schicht Fluidleitung 100 nach dem Extrudieren 203 der Zwischenschicht 103 der Festigkeitsträger 109 angeordnet wird, bevor in einem weiteren Verfahrensschritt das Extrudieren 207 der Außenschicht 101 durchgeführt wird.

Hier kann insbesondere das Extrudieren 201 der Sperrschicht 105, das Extrudieren 203 der Zwischenschicht 103 und das Extrudieren 207 der Außenschicht 101 als separate Extrusionsschritte 201, 203, 207 oder als ein gemeinsamer Co-Extrusionsschritt 201, 203, 207 durchgeführt werden.

Alle in Verbindung mit einzelnen Ausführungsformen der Erfindung erläuterten und gezeigten Merkmale können in unterschiedlicher Kombination in dem erfindungsgemäßen Gegenstand vorgesehen sein, um gleichzeitig deren vorteilhafte Wirkungen zu realisieren.

Der Schutzbereich der vorliegenden Erfindung ist durch die Ansprüche gegeben und wird durch die in der Beschreibung erläuterten oder den Figuren gezeigten Merkmale nicht beschränkt.

### BEZUGSZEICHENLISTE

- 100: Fluidleitung
- 101: Außenschicht
- 103: Zwischenschicht
- 105: Sperrschicht
- 107: Leitungsinnenraum
- 109: Festigkeitsträger
- 200: Verfahren zum Herstellen einer Fluidleitung
- 201: Erster Verfahrensschritt: Extrudieren einer Sperrschicht
- 203: Zweiter Verfahrensschritt: Extrudieren einer Zwischenschicht
- 205: Dritter Verfahrensschritt: Aufbringen eines Festigkeitsträgers
- 207: Vierter Verfahrensschritt: Extrudieren einer Außenschicht

## Patentansprüche

1. Fluidleitung (100) zum Leiten eines Fluids, mit:
einer Außenschicht (101), welche ein Acrylat-Elastomer umfasst;
einer Zwischenschicht (103), welche ein Acrylat-Elastomer umfasst, und welche innerhalb der Außenschicht (101) angeordnet ist, und
einer Sperrschicht (105), welche ein Fluorelastomer umfasst, welche innerhalb der Zwischenschicht (103) angeordnet ist und welche einen Leitungsinnenraum (107) der Fluidleitung (100) zum Leiten des Fluids begrenzt, wobei die Sperrschicht (105) ausgebildet ist, eine Diffusion des Fluids durch die Sperrschicht (105) zu reduzieren,
wobei die Außenschicht (101) und/oder Zwischenschicht (103) ein aminisch und/oder peroxidisch vernetztes Acrylat-Elastomer umfasst, und/oder wobei das Acrylat-Elastomer Ethylen-Acrylat Kautschuk (AEM) und/oder Polyacrylat-Kautschuk (ACM) umfasst.

2. Fluidleitung (100) nach Anspruch 1, wobei die Sperrschicht (105) ein bisphenolisch und/oder peroxidisch vernetztes Fluorelastomer umfasst, und/oder wobei das Fluorelastomer insbesondere Polymere aus Vinylidenfluorid (VDF), Hexafluorpropylen (HFP) und/oder Tetrafluorethylen (TFE) umfasst.

3. Fluidleitung (100) nach Anspruch 1 oder 2, wobei der Ethylen-Acrylat Kautschuk (AEM) und/oder der Polyacrylat-Kautschuk (ACM) Hochtemperatur-AEM und/oder Hochtemperatur-ACM umfasst.

4. Fluidleitung (100) nach einem der vorangehenden Ansprüche, wobei die Fluidleitung (100) zumindest einen Festigkeitsträger (109) umfasst, welcher zwischen der Sperrschicht (105) und der Zwischenschicht (103), oder welcher zwischen der Zwischenschicht (103) und der Außenschicht (101) angeordnet ist.

5. Fluidleitung (100) nach Anspruch 4, wobei der Festigkeitsträger (109) als ein einlagiger oder mehrlagiger Festigkeitsträger (109) ausgebildet ist, und wobei der Festigkeitsträger (109) insbesondere ein Gewebe, Gewirk und/oder Gestrick umfasst.

6. Fluidleitung (100) nach Anspruch 4 oder 5, wobei der Festigkeitsträger (109) aromatische oder aliphatische Polyamid-Fasern, Polyoxadiazol-Fasern, Polyester-Fasern, Polyphenylensulfid-Fasern, Aramid-Fasern, insbesondere meta-Aramid-Faser und/oder para-Aramid-Fasern, Polyimid-Fasern, Polyvinylacetal-Fasern, Polyetheretherketon-Fasern, oder Mischungen davon umfasst.

7. Fluidleitung (100) nach einem der vorangehenden Ansprüche, wobei die Fluidleitung (100) zumindest eine weitere Zwischenschicht umfasst, welche zwischen der Sperrschicht (105) und der Zwischenschicht (103), oder welche zwischen der Zwischenschicht (103) und der Außenschicht (101) angeordnet ist.

8. Fluidleitung (100) nach einem der vorangehenden Ansprüche, wobei die Zwischenschicht (103) und/oder die weitere Zwischenschicht einen Haftvermittler umfasst, wobei der Haftvermittler insbesondere Phosphonium-Salze, starke Basen wie z.B. Diaazabicycloundecen (DBU), Maleinsäureanhydride und/oder Bisphenole umfasst.

9. Fluidleitung (100) nach einem der vorangehenden Ansprüche, wobei die Fluidleitung (100) als ein formstabiler Formschlauch ausgebildet ist, wobei der Formschlauch insbesondere einen zweidimensional oder dreidimensional gekrümmten Verlauf aufweist.

## Claims

1. Fluid line (100) for conducting a fluid, comprising:
an outer layer (101), which comprises an acrylate elastomer;
an intermediate layer (103), which comprises an acrylate elastomer, and which is arranged within the outer layer (101), and
a barrier layer (105), which comprises a fluoroelastomer, which barrier layer (105) is arranged within the intermediate layer (103) and which delimits a line interior (107) of the fluid line (100) for conducting the fluid, wherein the barrier layer (105) is configured to reduce a diffusion of the fluid through the barrier layer (105),
wherein the outer layer (101) and/or intermediate layer (103) comprises an aminic and/or peroxide cross-linked acrylate elastomer, and/or wherein the acrylate elastomer comprises ethylene-acrylate rubber (AEM) and/or polyacrylate rubber (ACM).

2. Fluid line (100) according to claim 1, wherein the barrier layer (105) comprises a bisphenolic and/or peroxide cross-linked fluoroelastomer, and/or wherein the fluoroelastomer in particular comprises polymers of vinylidene fluoride (VDF), hexafluoropropylene (HFP) and/or tetrafluoroethylene (TFE).

3. Fluid line (100) according to claim 1 or 2, wherein the ethylene-acrylate rubber (AEM) and/or the polyacrylate rubber (ACM) comprises high-temperature AEM and/or high-temperature ACM.

4. Fluid line (100) according to one of the preceding claims, wherein the fluid line (100) comprises at least one reinforcing support (109), which is arranged between the barrier layer (105) and the intermediate layer (103), or which is arranged between the intermediate layer (103) and the outer layer (101).

5. Fluid line (100) according to claim 4, wherein the reinforcing support (109) is formed as a single-layer or multi-layer reinforcing support (109), and wherein the reinforcing support (109) in particular comprises a woven fabric, a warp-knitted fabric and/or a knitted fabric.

6. Fluid line (100) according to claim 4 or 5, wherein the reinforcing support (109) comprises aromatic or aliphatic polyamide fibers, polyoxadiazole fibers, polyester fibers, polyphenylene sulfide fibers, aramid fibers, in particular meta-aramid fiber and/or para-aramid fibers, polyimide fibers, polyvinyl acetal fibers, polyetheretherketone fibers, or mixtures thereof.

7. Fluid line (100) according to one of the preceding claims, wherein the fluid line (100) comprises at least one further intermediate layer, which is arranged between the barrier layer (105) and the intermediate layer (103) or which is arranged between the intermediate layer (103) and the outer layer (101).

8. Fluid line (100) according to one of the preceding claims, wherein the intermediate layer (103) and/or the further intermediate layer comprises a bonding agent, wherein the bonding agent in particular comprises phosphonium salts, strong bases such as diaazabicycloundecen (DBU), maleic acid anhydrides and/or bisphenols.

9. Fluid line (100) according to one of the preceding claims, wherein the fluid line (100) is formed as a dimensionally stable molded hose, wherein the molded hose in particular has a two-dimensional or three-dimensional curved course.

## Revendications

1. Conduite de fluide (100) destinée à conduire un fluide, comportant :
une couche extérieure (101), qui comprend un élastomère d'acrylate ;
une couche intermédiaire (103), qui comprend un élastomère d'acrylate et qui est disposée à l'intérieur de la couche extérieure (101), et
une couche d'arrêt (105), qui comprend un élastomère fluoré, qui est disposée à l'intérieur de la couche intermédiaire (103) et qui délimite un espace intérieur de conduite (107) de la conduite de fluide (100) destinée à conduire un fluide, la couche d'arrêt (105) étant conçue de façon à réduire une diffusion du fluide à travers la couche d'arrêt (105),
la couche extérieure (101) et/ou la couche intermédiaire (103) comprenant un élastomère d'acrylate réticulé par voie aminée et/ou peroxydique, et/ou l'élastomère d'acrylate comprenant un caoutchouc d'éthylène-acrylate (AEM) et/ou un caoutchouc de polyacrylate (ACM).

2. Conduite de fluide (100) selon la revendication 1, dans laquelle la couche d'arrêt (105) comprend un élastomère fluoré réticulé par voie bisphénolique et/ou peroxydique, et/ou dans lequel l'élastomère fluoré comprend en particulier des polymères de fluorure de vinylidène (VDF), d'hexafluoropropylène (HFP) et/ou de tétrafluoréthylène (TFE).

3. Conduite de fluide (100) selon la revendication 1 ou 2, dans laquelle le caoutchouc d'éthylène-acrylate (AEM) et/ou le caoutchouc de polyacrylate (ACM) comprennent un AEM haute température et/ou un ACM haute température.

4. Conduite de fluide (100) selon l'une des revendications précédentes, la conduite de fluide (100) comprenant au moins un renfort (109), qui est disposé entre la couche d'arrêt (105) et la couche intermédiaire (103) ou qui est disposé entre la couche intermédiaire (103) et la couche extérieure (101).

5. Conduite de fluide (100) selon la revendication 4, dans laquelle le renfort (109) est conçu comme un support (109) monocouche ou multicouche, et le support (109) comprenant en particulier un tissu, un tricot et/ou un tissu maillé.

6. Conduite de fluide (100) selon la revendication 4 ou 5, dans laquelle le renfort (109) comprend des fibres de polyamide aromatiques ou aliphatiques, des fibres de polyoxadiazole, des fibres de polyester, des fibres de poly(sulfure de phénylène), des fibres aramides, en particulier des fibres méta-aramides et/ou des fibres para-aramides, des fibres de polyimide, des fibres de polyvinylacétal, des fibres de polyétheréthercétone ou des mélanges de celles-ci.

7. Conduite de fluide (100) selon l'une des revendications précédentes, la conduite de fluide (100) comprenant au moins une couche intermédiaire supplémentaire, qui est disposée entre la couche d'arrêt (105) et la couche intermédiaire (103) ou qui est disposée entre la couche intermédiaire (103) et la couche extérieure (101).

8. Conduite de fluide (100) selon l'une des revendications précédentes, dans laquelle la couche intermédiaire (103) et/ou la couche intermédiaire supplémentaire comprennent un promoteur d'adhérence, le promoteur d'adhérence comprenant en particulier des sels de phosphonium, des bases fortes telles que par exemple le diazabicycloundécène (DBU), des anhydrides maléiques et/ou des bisphénols.

9. Conduite de fluide (100) selon l'une des revendications précédentes, la conduite de fluide (100) étant conçue comme un tuyau préformé à stabilité de forme, le tuyau préformé présentant en particulier un tracé incurvé bidimensionnel ou tridimensionnel.
